# EUROPÄISCHE PATENTSCHRIFT

(11) **EP 0 788 986 B1**
(45) Veröffentlichungstag und Bekanntmachung des Hinweises auf die Patenterteilung: **22.03.2000**
(21) Anmeldenummer: 97101094.7
(22) Anmeldetag: 24.01.1997
(51) Int. Cl.: B65G 15/20

(54) **Scheibenstapler, insbesondere für Käsescheiben**
Slice stacking device particulary for sliced cheese
Empileur de tranches en particulier pour tranches de fromage

(30) Priorität: 10.02.1996 DE 19604926
(43) Veröffentlichungstag der Anmeldung: 13.08.1997
(73) Patentinhaber: Natec Reich, Summer GmbH & Co. KG, 88178 Heimenkirch (DE)
(72) Erfinder: Baur, Willi, 88167 Gestratz (DE); Kierok, Andreas, 88161 Lindenberg (DE); Steinbauer, Timo, 88161 Lindenberg (DE); Hartmann, Franz, 88171 Weiler/Simmerberg (DE); Adler, Herbert, 88161 Lindenberg (DE); Milz, Oskar, 88178 Heimenkirch (DE); Zeuschner, Roland, 88260 Argenbühl (DE); Honsberg, Günter, 88239 Wangen (DE)
(74) Vertreter: Riebling, Peter, Dr.-Ing.

(56) Entgegenhaltungen:
- WO-A-90/06274
- DE-A- 4 315 416
- DE-U- 8 709 053
- FR-A- 2 683 213
- US-A- 2 905 341
- US-A- 4 768 642

## Beschreibung

Die Erfindung betrifft einen Scheibenstapler , insbesondere für Käsescheiben und dergleichen scheibenförmige Gegenstände, nach dem Oberbegriff des Patentanspruchs 1.

Derartige scheibenförmige Gegenstände können im übrigen z. B. Disketten, Kartonstreifen, kompakte Wurstscheiben oder andere Lebensmittelprodukte sein, die eine gewisse mechanische Flexibilität aufweisen.

Die Erfindung geht hierbei von einem Stand der Technik aus, wie er durch die DE-U-87 09 053.8 bekannt ist.

Bei dem genannten Gebrauchsmuster wird ein Scheibenstapler gezeigt, der aus zwei parallel einen gegenseitigen Abstand voneinander einnehmenden Bürstenbändern besteht, wobei die Bürstenbänder einen Förderraum bilden.

An der Einlaufseite wird eine liegende Käsescheibe zwischen die Bürsten der einander gegenüberstehenden Bürstenbänder eingeschossen, worauf sie zur Anlage an einem vertikal gerichteten Anschlagblech kommt.

Das Einschießen einer horizontal liegenden Scheibe zwischen die stehenden Bürsten von zwei einander gegenüberliegenden Bürstenbändern hat aber den Nachteil, daß während des Verlassens des Einschußbandes und vor dem Eintreten der Scheibe zwischen die Bürsten diese Scheibe eine gewisse ballistische Fallkurve durchläuft, die nicht genau berechenbar ist.

Diese Fallkurve hängt von verschiedenen Parametern ab, wie z.B. dem Gewicht der Scheibe, der Geschwindigkeit der Scheibe, der mechanischen Biegesteifigkeit der Scheibe und anderen Parametern, so daß es bisher nicht gelungen ist, den Einlauf einer derartigen Scheibe in das Bürstenband genau festlegen zu können.

Bei dem genannten Stand der Technik besteht also der Nachteil, daß die Scheibe nicht genau definiert zwischen die Bürsten des Bürstenbandes eingeschossen werden kann und daher entweder verkantet, schiefliegt oder sogar aus dem Bürstenband herausfällt.

Der Erfindung liegt deshalb die Aufgabe zugrunde, einen Scheibenstapler der eingangs genannten Art so weiterzubilden, daß mit wesentlich besserer Genauigkeit eine Scheibe in das Bürstenband eingeschossen werden kann, wobei die Scheibe eine genau definierte Lage im Bürstenband einnehmen soll.

Zur Lösung der gestellten Aufgabe ist die Erfindung durch die technische Lehre des Anspruches 1 gekennzeichnet.

Wesentliches Merkmal der Erfindung ist, daß das Bürstenband nun liegend angeordnet ist und daß die Scheiben von oben oder von unten durch ein entsprechendes Einschußband in das liegende Bürstenband eingeschossen werden.

Mit der gegebenen technischen Lehre ergibt sich der wesentliche Vorteil, daß aufgrund des vertikalen Einschießens der Scheibe von mindestens einem obenliegenden oder einen untenliegenden Einschußband nun eine genau definierte Lage zwischen den Borsten des Bürstenbandes erreicht werden kann.

Statt eines einzigen oben und unten liegenden Bürstenbandes können auch mehrere derartige Bürstenbänder oben und/oder unten angeordnet sein.

Es wird also eine ballistische Fallkurve vermieden, weil horizontal liegende Scheiben nicht mehr eingeschossen werden, die sich während des Fluges verbiegen oder verformen könnten und die nicht genau definiert fallen, sondern nach der Erfindung wird die Scheibe jeweils in Schwerkraftrichtung zwischen die Borsten des Bürstenbandes eingeschossen.

Hierbei wird es bevorzugt, wenn das Einschußband so dicht über dem Bürstenband angeordnet wird, daß die Scheibe beim Verlassen des Einschußbandes einerseits noch in dem Einschußband gehalten ist und andererseits bereits in die Bürsten des Bürstenbandes eintaucht und dort definiert geführt wird.

Die Bürsten des Bürstenbandes führen im übrigen eine Bremswirkung auf die eingeschossene Scheibe aus, und eine in Folie eingeschweißte Scheibe schlägt dann mit ihrem unteren Siegelrand auf einer Auflagefläche auf und wird dort federnd über die Siegelnaht abgestützt.

Versuche haben gezeigt, daß die Scheibe, die schwerkraftbedingt und durch die Geschwindigkeit des Einschußbandes bedingt zwischen die Borsten eingeschossen wird, von den Borsten abgefedert und abgebremst wird und dann federnd mit der unteren Siegelnaht auf der Auflagefläche auftrifft, dort kurz aufgrund der elastischen Verformung der Siegelnaht nach oben hüpft und sich wieder stabil mit ihrer gestreckten Siegelnaht auf der Auflagefläche ablegt.

Damit werden also stehend transportierte Scheiben verwirklicht, die im gegenseitigen Abstand voneinander in das Bürstenband eingeschossen werden und beidseitig geführt von den Bürsten gehalten werden.

Bei entsprechend dichter Anordnung der Borsten auf dem Bürstenband ist es daher möglich, die Scheiben sehr eng auf dem Bürstenband zu packen, denn im Prinzip muß das Bürstenband nur um die Breite einer einzelnen Scheiben in Transportrichtung fortbewegt werden, damit sofort die nächste Scheibe eingeschossen werden kann.

Damit ergibt sich der Vorteil, daß in dem Bürstenband eine sehr enge Packung der einzelnen zu transportierenden Scheiben verwirklicht wird.

Dadurch ergibt sich eine hohe Packungsleistung im Bereich des Bürstenbandes.

Das Einschußband wird beispielsweise mit einer Geschwindigkeit von 2 Metern pro Sekunde angetrieben, während das Bürstenband mit einer Geschwindigkeit von beispielsweise 0,10 Meter pro Sekunde angetrieben wird.

Zweck des genannten Bürstenbandes ist, daß man zunächst zwischen den einzelnen Borsten des Bürstenbandes die Scheiben vereinzelt und möglichst schnell zu einer Stapelbildung führt.

Hierbei ist vorgesehen, daß im Auslaufbereich des Bürstenbandes - welches möglichst kurz ausgebildet ist - Stapelbildung erfolgt.

Wesentlich hierbei ist, daß im Auslaufbereich des Bürstenbandes eine Stapelbildung dadurch erfolgt, daß die in den Borsten des Bürstenbandes angeordneten und einen gegenseitigen Abstand voneinander einnehmenden Scheiben gegen einen Anschlag laufen, welcher im Transportbereich des Bürstenbandes angeordnet ist. Dieser Anschlag ist nicht feststehend, sondern er ist als Anschlagsfläche im Bereich eines Drehkreuzes ausgebildet. Die Scheiben laufen somit stehend auf diese vertikal ausgerichtete Anschlagfläche auf und stauen sich zu einem Stapel auf, wobei der Stapel z. B. aus 10 bis 25 Scheiben gebildet wird. Ist die Stapelbildung abgeschlosssen, dann wird das gesamte Drehkreuz um den Winkel von z. B. 90 ° gedreht, und der stehend gebildete Stapel wird somit umgekippt und kommt in den Auslaufbereich eines weiteren Transportbandes, wo der liegende Stapel von diesem Transportband auf ein weiteres Transportband übergeben wird.

Vorteilhaft kann im Bereich des Bürstenbandes noch eine Stoppvorrichtung mit vorzugsweise als Photozelle oder Lichtschranke ausgebildetem Sensor angeordnet sein, welcher verhindert, daß bei der nachgeschalteten Stapelbildungsvorrichtung noch Scheiben auflaufen, die nicht mehr zu einem korrekt gebildeten Stapel gehören.

Vorteilhaft hierbei ist, daß das Drehkreuz z. B. vier im Abstand voneinander angeordnete Anschlagflächen aufweist und das Drehkreuz dann in vier Drehschritten gedreht wird, so daß eine hohe Stapelleistung gewährleistet ist. Damit wird ein sehr kurzer Verfahrweg von dem stehenden Stapel zum liegenden Stapel gewährleistet, wobei der Vorteil besteht, daß wegen dieses kurzen Verfahrweges die einzelnen im Stapel angeordneten Scheiben nicht verrutschen oder gar herausfallen können.

Selbstverständlich ist ein Drehkreuz-Wechsel bei verschiedenen Stapelhöhen vorgesehen/möglich.

Die gesamte Anlage hat den Vorteil, daß sie sehr kompakt gebaut ist und damit geringen Raum beansprucht, wenn z.B. das Bürstenband eine Länge von 350 mm und die Stapeldrehvorrichtung einen Durchmesser von 135 mm aufweisen.

Im folgenden wird die Erfindung anhand von lediglich einen Ausführungsweg darstellenden Zeichnungen näher erläutert.

Es zeigen:
- Figur 1:: die Transportvorrichtung schematisiert in Seitenansicht,
- Figur 2:: die Stirnansicht der Transportvorrichtung in Richtung des Pfeiles II in Figur 1,
- Figur 3:: die Draufsicht auf die Transporteinrichtung in Pfeilrichtung III in Figur 1,
- Figur 4:: die Seitenansicht der Stapelbildungsvorrichtung,
- Figur 5:: Draufsicht auf die Stapelbildungsvorrichtung in Pfeilrichtung V in Figur 4.

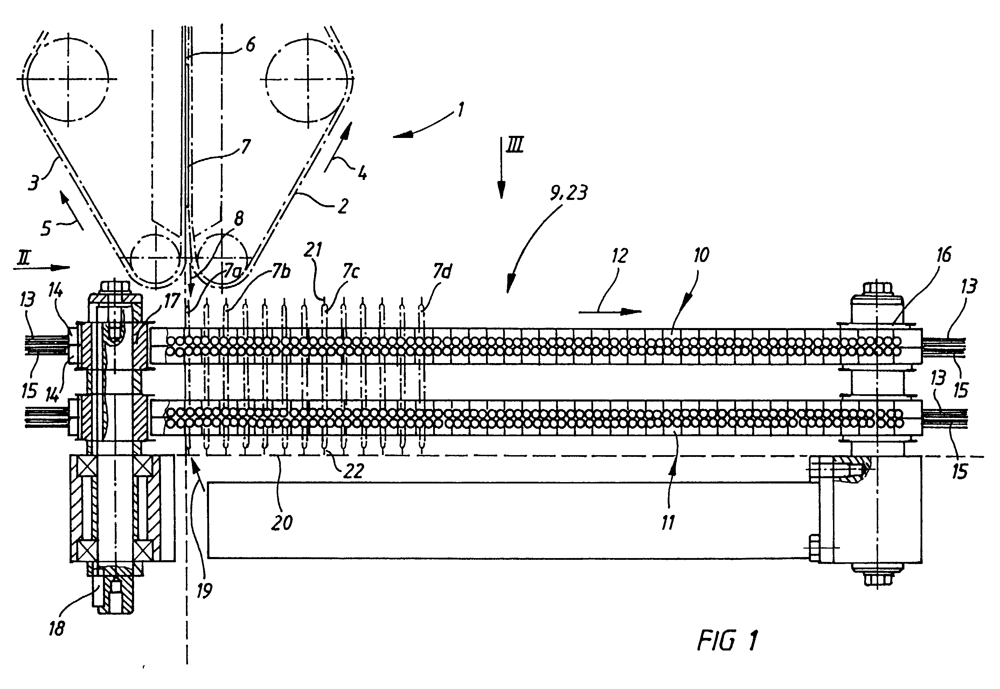

In Figur 1 ist ein Einschußband 1 schematisiert dargestellt, welches im wesentlichen aus zwei gegenläufig angetriebenen Transportriemen 2, 3 besteht, welche jeweils in den Pfeilrichtungen 4, 5 angetrieben sind.

Die Transportriemen 2, 3 bilden einen winzigen Förderspalt 6, in den jeweils eine Scheibe 7 in Pfeilrichtung 8 nach unten befördert wird.

Aufgrund der hohen Geschwindigkeit der Transportriemen 2, 3 wird die im Förderspalt 6 liegende Scheibe 7 in Pfeilrichtung 8 zwischen die Borsten einer darunter angeordneten Transportvorrichtung 9 geschossen.

Im gezeigten Ausführungsbeispiel besteht die Transportvorrichtung 9 aus jeweils links und rechts stehend angeordneten Umlenkrollen 16, 17, wobei über jede der Umlenkrollen 16,17 ein Bürstenband 23, 24 als Endlosband läuft und angetrieben ist.

Zur Erläuterung des Aufbaues jedes einzelnen Bürstenbandes 23, 24 genügt die Erläuterung eines einzigen Bürstenbandes, weil das andere Bürstenband und dessen Antrieb genau gleich ausgebildet ist.

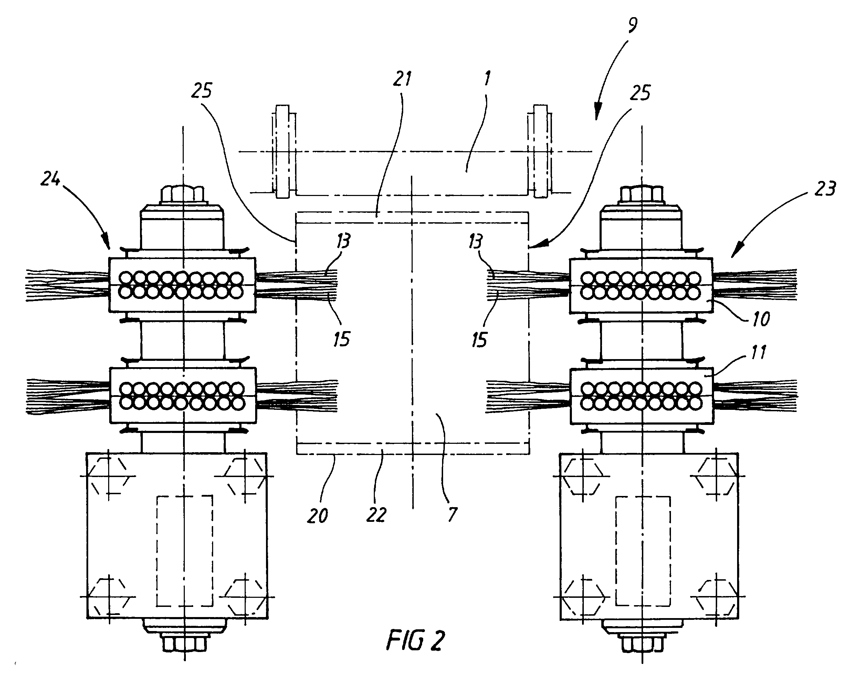

Jedes Bürstenband 23, 24 besteht gemäß den Darstellungen in Figur 1 und 2 aus einem oberen Bürstenband 10 und einem unteren Bürstenband 11.

Beide Bürstenbänder sind aus einem Kunststoffmaterial ausgebildet und als Zahnflachriemen ausgebildet. Auf diesem Zahnflachriemen sind über nicht näher dargestellte Besfestigungsmittel Halteblöcke 14 befestigt, welche die Borsten 13, 15 aufnehmen.

Jeder Halteblock 14 nimmt also einen Borstenbündel 13, sowie 15 auf und die Halteblöcke 14 sind paarweise vertikal übereinander angeordnet, so daß paarweise übereinander angeordnete Borstenbündel 13, 15 gebildet sind. Aus Kostengründen wurde jeweils das Bürstenband 23, 24 in die oberen und unteren Bürstenbänder 10, 11 aufgeteilt.

In einer anderen Ausgestaltung kann es vorgesehen sein, statt der geteilten Bürstenbänder 23, 24 (bestehend aus oberen und unteren Bürstenbändern 10, 11) auch jeweils ein durchgehendes Bürstenband zu verwenden.

Die Borsten 13, 15 bestehen bevorzugt aus einem Kunststoffmaterial.

Die Bürstenbänder 23, 24 sind in Pfeilrichtung 12 angetrieben, wobei der Antrieb über eine Antriebsachse 18 erfolgt, die von einem nicht näher dargestellten Antrieb beaufschlagt ist.

In Figur 1 ist bei Position 19 noch dargestellt, daß im Bodenbereich einer Auflagefläche 20, die etwa dem Förderspalt 6 des Einschußbandes 1 gegenüberliegt, eine Ausschußklappe 19 angeordnet ist, welche in der Drehachse 26 drehbar gelagert ist.

Durch eine entsprechende Steuerung kann die Ausschußklappe 19 geöffnet werden, wenn fehlerhaftes Material von dem Einschußband 1 in die Transportvorrichtung 9 eingeschossen wird.

Ansonsten werden die Scheiben 7 in Pfeilrichtung 8 mit hoher Geschwindigkeit zwischen die Borsten 13, 15 der Bürstenbänder 23, 24 eingeschossen und bleiben dort stehen. Hierbei prallen sie mit ihrer unteren Siegelnaht 22 auf die untere, bodenseitige Auflagefläche 20 auf, federn dort kurz ab und richten sich zwischen den Borsten 13, 15 aus.

Die oberen Siegelnähte 21 ragen dann über das obere Bürstenband 10 hinaus.

Es ist nicht dargestellt, daß im weiteren Verlauf (in Transportrichtung 12) obere Führungsbleche vorhanden sind, welche dafür sorgen, daß alle Scheiben 7 mit ihren unteren Siegelnähten 22 satt auf der Auflagefläche 20 aufstehen. Ebenso ist nicht dargestellt, daß noch seitliche, vertikale Führungsflächen vorhanden sind, welche die Scheiben 7 gemäß Figur 2 zwischen den Borsten 13, 15 etwa mittig zentrieren. Diese Führungsflächen sind in Form der seitlichen Führung 25 in Figur 2 angedeutet.

In einer Weiterbildung der vorliegenden Erfindung kann es vorgesehen sein, daß im Bereich des Bürstenbandes 23,24 noch eine Stoppvorrichtung 31 angeordnet wird, welche verhindert, daß bei der nachgeschalteten Stapelbildungsvorrichtung 38 noch Scheiben auflaufen, die nicht mehr zu einem konkreten, gebildeten Stapel 33 gehören.

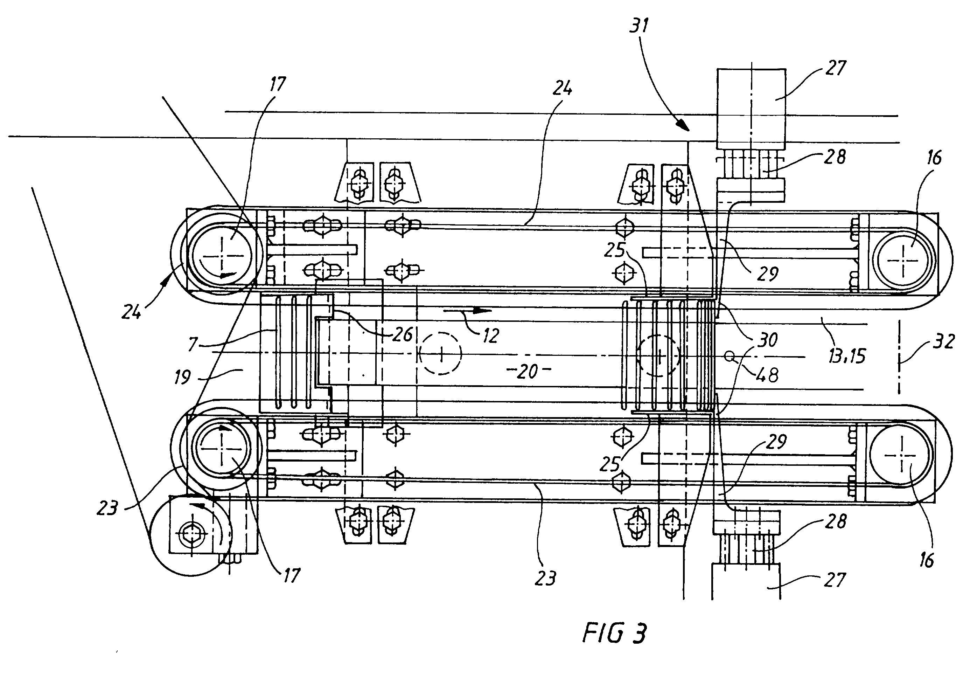

In Figur 3 ist des weiteren ein im Bereich der Stoppvorrichtung 31 angeordneter und mit dieser zusammenwirkender, vorzugsweise als Photozelle oder Lichtschranke ausgebildeter, Sensor 48 dargestellt.

Diese Stoppvorrichtung 31 besteht im wesentlichen aus zwei symmetrisch einander gegenüberliegenden, liegenden Pneumatikyzlindern 27, wobei jeder Pneumatikzylinder 27 eine zugeordnete Kolbenstange 28 antreibt. Diese Kolbenstange 28 ist mit jeweils einem Stoppblech 29 verbunden, welches aus drei verschiedenen Fingern 30 besteht, die parallel und in gegenseitigem Abstand zueinander angeordnet sind, wobei der unterste Finger 30 unterhalb der untersten Borstenreihe des unteren Bürstenbandes 11, der mittlere Finger 30 zwischen den Bürstenbändern 10 und 11 und der obere Finger 30 oberhalb des oberen Bürstenbandes 10 angeordnet ist und jeweils seitlich sich an der jeweiligen Scheibe 7 anlegt.

Dies ist aus Figur 3 zu erkennen, wo sich die Finger 30 jeweils seitlich anlegen, wobei nur der oberste Finger sichtbar ist.

Hierbei sind die Finger 30 gerade in Eingriffsposition, das heißt sie stauen gerade die im Bürstenband in Pfeilrichtung 12 transportierten Scheiben auf, maximal laufen hierbei zwei bis drei Scheiben an den Stoppblechen 29 auf und werden dann nach Zurückziehen der Stoppbleche 29 aus dem Förderbereich der Transportvorrichtung 9 in Pfeilrichtung 12 weitertransportiert, bis sie bei Position 32 in den Bereich der Stapelbildungsvorrichtung 38 kommen.

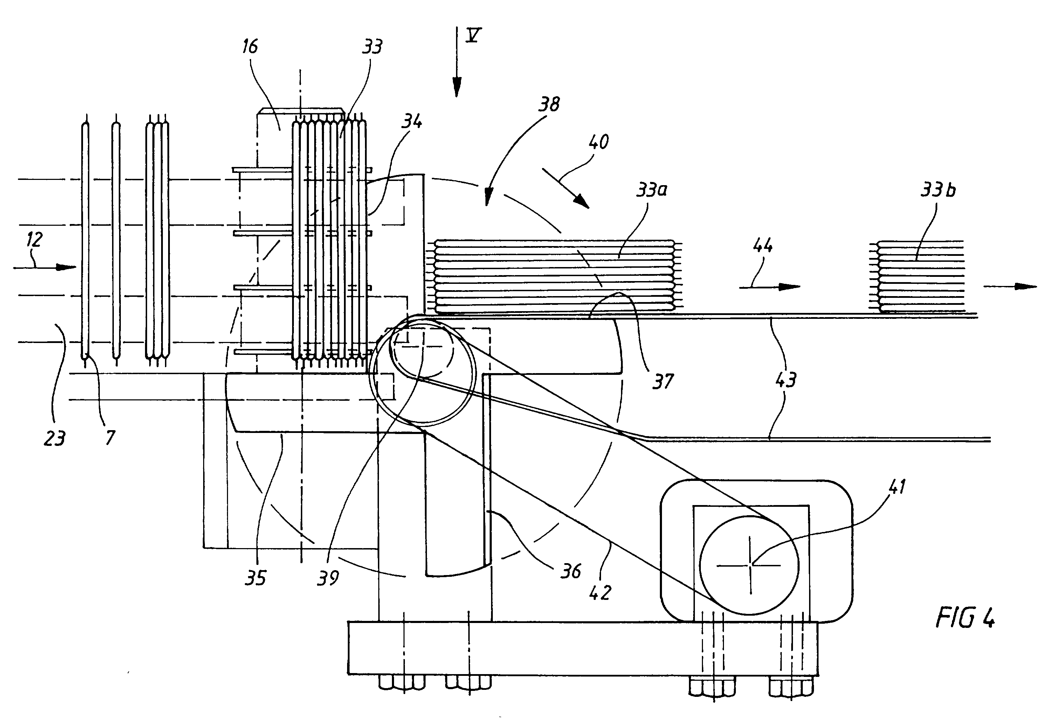

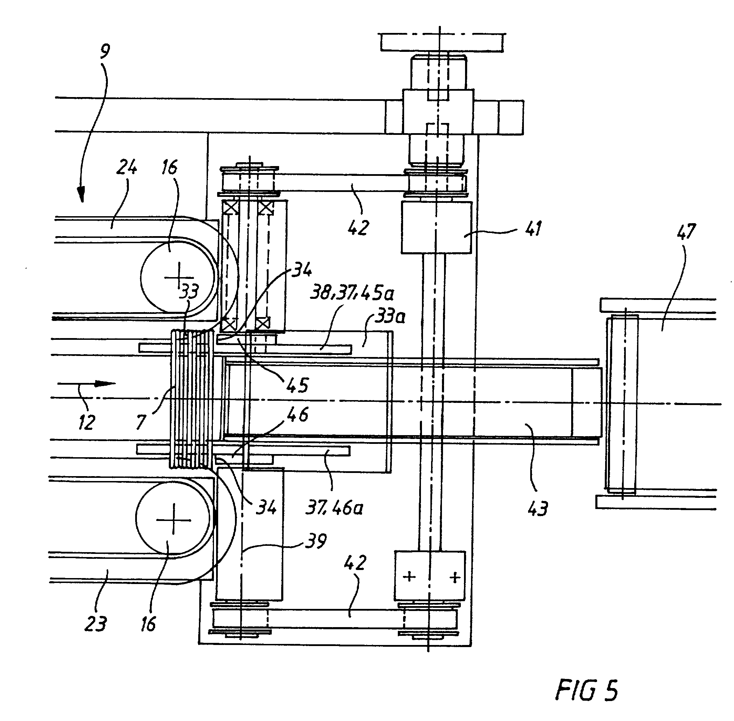

Die Stapelbildungsvorrichtung 38 ist in den Figuren 4 und 5 näher beschrieben.

Es ist erkennbar, daß die Scheiben 7 in Pfeilrichtung 12 gegen eine Anschlagfläche 34 laufen, wo sie aufgestaut werden.

Hierbei ist wichtig, daß mehrere Anschlagflächen 34, 35, 36, 37 gleichmäßig am Umfang verteilt eines Drehkreuzes angeordnet sind und dieses Drehkreuz aus einzelnen Fingern 45, 46 besteht, welche die jeweilige Anschlagflächen 34 - 37 bilden.

Beispielsweise wird ein Scheibenstapel 33 an der Anschlagfläche 34 gebildet, welche durch die Finger 45, 46 definiert wird.

Im Winkel von 90 ° versetzt hierzu sind weitere Finger 45a, 46a angeordnet, welche die Anschlagfläche 37 definieren.

Das gesamte Drehkreuz ist in der Drehachse 39 schrittweise drehend angetrieben, wobei von einem Antrieb 41 ausgehend paarweise Riemen 42 vorgesehen sind, welche über eine entsprechende Umlenkrolle das Drehkreuz in Pfeilrichtung 40 schrittweise drehend antreiben.

In der in Figur 4 gezeigten Situation laufen also die Scheiben 7 zu dem Scheibenstapel 33 auf, indem sie an der Anschlagfläche 34 aufgestaut werden. Sobald der Stapel die erforderliche Scheibenanzahl aufweist, wird das Drehkreuz in Pfeilrichtung 40 um 90 ° angetrieben, so daß der stehende Stapel 33 in den liegenden Stapel 33a übergeführt wird. Hierbei wird der liegende Scheibenstapel 33a auf einem Transportband 43 abgelegt und in Pfeilrichtung 44 abtransportiert.

Wichtig hierbei ist, daß wenn der stehende Stapel 33 durch Drehung des Drehkreuzes in Pfeilrichtung 40 in den liegenden Scheibenstapel 33a übergeführt wird, daß dann keine weiteren Scheiben mehr in Pfeilrichtung 12 gegen die Stapelbildungsvorrichtung 38 transportiert werden. Zu diesem Zweck ist die vorher beschriebene Stoppvorrichtung 31 vorgesehen, die in diesem kurzen Zwischenraum mit ihren Stoppblechen 29 in den Förderbereich der Transportvorrichtung 9 eingreift und dort die geförderten Scheiben 7 zurückhält.

Wie eingangs ausgeführt, besteht das Drehkreuz im wesentlichen aus den Fingern 45, 46 bzw. 45a, 46a, die um 90 am Umfang versetzt zueinander angeordnet sind.

Selbstverständlich ist das Drehkreuz nicht auf eine derartige Ausführungsform beschränkt, es können beispielsweise nur zwei einandergegenüberliegende Anschlagflächen vorhanden sein, die im Winkel von 180 ° zueinander versetzt sind.

Die besagten Finger 45, 45a bzw. 46, 46a werden dann an dem Transportband 43 vorbeigeschwenkt.

Es ist ebenso möglich, das Transportband 43 aus einzelnen Transportriemen auszubilden und die Finger 45, 46 zwischen diese Riemen zu schwenken und durch diese Riemen hindurch anstatt - wie im Ausführungsbeispiel gezeigt - am Transportband 43 außen vorbeizuführen.

Der auf dem Transportband 43 gebildete Stapel 33b wird dann einer Umverpackungsmaschine zugeführt, wo die Umverpackung um den Stapel gelegt und gesiegelt wird.

Es ist hierzu ein Abtransportband 47 vorgesehen.

## Patentansprüche

1. Scheibenstapler, bestehend aus mindestens einem die Scheiben zufördernden Einschußband (1) und einer zu dessen Förderrichtung senkrecht verlaufenden Transportvorrichtung (9) mit mindestens zwei mit Abstand parallelen, Bürstenbändern (23, 24), deren Borsten (13, 15) mit im wesentlichen horizontaler Richtung gegeneinander weisen und einen horizontalen Förderraum für die Scheiben bilden, **dadurch gekennzeichnet,** daß die Bürstenbänder (23, 24) im wesentlichen horizontal liegend angeordnet sind und die Förderrichtung des Einschußbandes (1) im wesentlichen vertikal ist.

2. Scheibenstapler nach Anspruch 1, **dadurch gekennzeichnet,** daß das Einschußband (1) im wesentlichen aus zwei gegenläufig angetriebenen und einen Förderspalt (6) bildenden Transportriemen (2, 3) besteht, wobei durch den Förderspalt (6) die Scheiben (7) nacheinander im wesentlichen in vertikaler Richtung in die Transportvorrichtung (9) befördert werden.

3. Scheibenstapler nach Anspruch 1 oder 2, **dadurch gekennzeichnet,** daß die Transportvorrichtung (9) aus mindestens zwei im wesentlichen vertikal angeordneten Umlenkrollen-Paaren (16, 17) besteht und um jedes Umlenkrollen-Paar (16, 17) ein enloses Bürstenband (23 und 24) angetrieben läuft.

4. Scheibenstapler nach Anspruch 1 - 3, **dadurch gekennzeichnet,** daß jedes Bürstenband (23, 24) wiederum aus mindestens zwei im wesentlichen vertikal übereinander liegenden Bürstenbändern (10, 11) gebildet ist und als Kunststoff-Zahnflachriemen mit befestigten Halteblöcken (14) zur Aufnahme von Borsten (13, 15) ausgebildet ist.

5. Scheibenstapler nach Anspruch 1 - 3, **dadurch gekennzeichnet,** daß jedes Bürstenband (23, 24) einteilig als Kunststoff-Zahnflachriemen mit befestigten Halteblöcken (14) zur Aufnahme von Borsten (13, 15) ausgebildet ist.

6. Scheibenstapler nach Anspruch 1 - 5, **dadurch gekennzeichnet,** daß die Bürstenbänder (23, 24) je über eine von einem Antrieb beaufschlagte Antriebsachse (18) angetrieben sind.

7. Scheibenstapler nach Anspruch 1 - 6, **dadurch gekennzeichnet,** daß an einer unter dem Förderraum angeordneten Auflagefläche (20) eine ansteuerbare Ausschußklappe (19) angeordnet ist, welche um eine Drehachse (26) drehbar gelagert ist und etwa dem Förderspalt (6) des Einschußbandes (1) vertikal gegenüberliegt.

8. Scheibenstapler nach Anspruch 1 - 7, **dadurch gekennzeichnet,** daß im horizontalen Förderraum zwischen den Bürstenbändern (23, 24) vertikale und horizontale Führungsbleche (20, 25) um die Scheiben (7) herum zur Zentrierung zwischen den Borsten (13, 15) angeordnet sind.

9. Scheibenstapler nach Anspruch 1 - 8, **dadurch gekennzeichnet,** daß im Bereich des Bürstenbandes (23, 24) zusätzlich eine Stoppvorrichtung (31) zum Aufstauen von Scheiben (7) vorgesehen ist, welche im wesentlichen aus zwei horizontalen, symmetrisch einander gegenüberliegenden Pneumatikzylindern (27) mit je einer Kolbenstange (28) und je einem Stoppblech (29) mit Fingern (30) besteht.

10. Scheibenstapler nach Anspruch 1 - 9, **dadurch gekennzeichnet,** daß die Transportvorrichtung (9) mit einer nachgeschalteten Stapelbildungsvorrichtung (38) zusammenwirkt, welche im wesentlichen aus einem in einer Drehachse (39) schrittweise drehbaren Drehkreuz (34 - 37; 45, 46) gebildet wird.

11. Scheibenstapler nach Anspruch 10, **dadurch gekennzeichnet,** daß das Drehkreuz im wesentlichen aus am Umfang versetzt angeordneten Fingern (45, 46) besteht, welche die Anschlagflächen (34 - 37) für den Scheibenstapel (33) bilden, wobei die Finger (45, 46) zur Ablage des Scheibenstapels (33) schrittweise an den Seiten eines Transportbandes (43) vorbei oder durch die Riemen dieses Transportbandes (43) hindurch geschwenkt werden.

12. Scheibenstapler nach Anspruch 11, **dadurch gekennzeichnet,** daß für den Weitertransport des durch das Drehkreuz (34 - 37; 45, 46) abgelegten, horizontal liegenden Stapels (33a, 33b) Transportbänder (43, 47) vorgesehen sind.

## Claims

1. Slice stacker comprising at least one input belt (1) to feed slices and a conveyor apparatus (9) extending perpendicularly to the feeding direction of said input belt and having at least two brush lines (23, 24) which are parallel and spaced apart, with bristles (13, 15) pointing towards each other in a substantially horizontal direction and forming a horizontal feeding space for the slices, characterized in that the brush lines (23, 24) are disposed substantially horizontally, and the feeding direction of the input belt (1 ) is substantially vertical.

2. Slice stacker according to Claim 1, characterized in that the input belt (1) substantially comprises two conveyor belts (2, 3) driven in opposite directions and forming a feeding gap (6), the slices (7) being conveyed through the feeding gap (6) to the conveyor apparatus (9) one after another in a substantially vertical direction.

3. Slice stacker according to Claim 1 or 2, characterized in that the conveyor apparatus (9) comprises at least two substantially vertically disposed pairs of end pulleys (16, 17) with an endless brush line (23 and 24) running around each end pulley pair (16, 17).

4. Slice stacker according to Claims 1-3, characterized in that each brush line (23, 24) is made up in turn of at least two brush belts (10, 11) which are located substantially vertically one above the other and is formed as a flat plastic cog belt with fixed holding blocks (14) for receiving bristles (13, 15).

5. Slice stacker according to Claims 1-3, characterized in that each brush line (23, 24) is made in one piece as a flat plastic cog belt with fixed holding blocks (14) for receiving bristles (13, 15).

6. Slice stacker according to Claims 1-5, characterized in that the brush lines (23, 24) are each driven by a drive shaft (18) acted on by a drive.

7. Slice stacker according to Claims 1-6, characterized in that an actuatable reject flap (19) is arranged level with a rest surface (20) arranged under the feeding gap, is pivotable about a hinge (26), and is located vertically approximately in line with the feeding gap (6) of the input belt (1).

8. Slice stacker according to Claims 1-7, characterized in that vertical and horizontal guide plates (20, 25) are arranged around the slices (7) in the horizontal feeding space between the brush lines (23, 24), to centre the slices between the bristles (13, 15).

9. Slice stacker according to Claims 1-8, characterized in that a stop device (31) for accumulating slices (7) is additionally provided in the region of the brush line (23, 24), and substantially comprises two horizontal pneumatic cylinders (27) symmetrically opposite one other, each having a piston rod (28) and a stop plate (29) with fingers (30).

10. Slice stacker according to Claims 1-9, characterized in that the conveyor apparatus (9) operates in conjunction with a downstream stack-forming apparatus (38) essentially formed by a turnstile (34-37; 45, 46) intermittently rotatable in an axis (39) of rotation.

11. Slice stacker according to Claim 10, characterized in that the turnstile substantially comprises fingers (45, 46) disposed at intervals around its circumference and forming stop faces (34-37) for the slice stacks (33), the fingers (45, 46) being intermittently tilted past the sides of a conveyor belt (43), or through the straps of this conveyor belt (43), to deposit the slice stack (33) thereon.

12. Slice stacker according to Claim 11, characterized in that conveyor belts (43, 47) are provided to carry away the stack (33a, 33b) deposited by the turnstile (34-37; 45, 46) and lying horizontally.

## Revendications

1. Empileur de tranches comprenant au moins une bande d'introduction (1) amenant les tranches, et un dispositif de transport (9) perpendiculaire au sens de transport de ladite bande et comportant au moins deux bandes de brosses (23, 24) espacées et parallèles dont les brosses (13, 15) sont dirigées globalement horizontalement les unes vers les autres et forment un espace de transport horizontal pour les tranches, caractérisé en ce que les bandes de brosses (23, 24) sont disposées globalement à l'horizontale tandis que le sens de transport de la bande d'introduction (1) est globalement vertical.

2. Empileur de tranches selon la revendication 1, caractérisé en ce que la bande d'introduction (1) se compose essentiellement de deux courroies de transport (2, 3) qui sont entraînées en sens inverse et qui définissent un interstice de transport (6), les tranches (7) étant amenées successivement dans le dispositif de transport (9) globalement à la verticale, à travers l'interstice de transport (6).

3. Empileur de tranches selon la revendication 1 ou 2, caractérisé en ce que le dispositif de transport (9) se compose d'au moins deux paires de poulies de renvoi (16, 17) disposées globalement à la verticale, et une bande de brosses sans fin (23 et 24) est entraînée et passe autour de chaque paire de poulies de renvoi (16, 17).

4. Empileur de tranches selon l'une des revendications 1 à 3, caractérisé en ce que chaque bande de brosses (23, 24) se compose elle-même d'au moins deux bandes de brosses (10, 11) superposées globalement à la verticale et est conçue comme une courroie dentée plate en matière plastique pourvue de blocs de retenue fixés (14) destinés à recevoir des poils (13, 15).

5. Empileur de tranches selon l'une des revendications 1 à 3, caractérisé en ce que chaque bande de brosses (23, 24) est conçue d'une seule pièce comme une courroie dentée plate en matière plastique pourvue de blocs de retenue fixés (14) destinés à recevoir les poils (13, 15).

6. Empileur de tranches selon l'une des revendications 1 à 5, caractérisé en ce que les bandes de brosses (23, 24) sont entraînées chacune par l'intermédiaire d'un axe d'entraînement (18) contraint par un entraînement.

7. Empileur de tranches selon l'une des revendications 1 à 6, caractérisé en ce qu'il est prévu sur une surface d'appui (20) disposée sous l'espace de transport un volet de rebut apte à être commandé (19) qui est monté pour pouvoir pivoter autour d'un axe de rotation (26) et qui se trouve à peu près en face de l'interstice de transport (6) de la bande d'introduction (1), verticalement.

8. Empileur de tranches selon l'une des revendications 1 à 7, caractérisé en ce que dans l'espace de transport horizontal entre les bandes de brosses (23, 24), des tôles de guidage verticales et horizontales (20, 25) sont disposées autour des tranches (7) pour centrer celles-ci entre les poils (13, 15).

9. Empileur de tranches selon l'une des revendications 1 à 8, caractérisé en ce qu'il est également prévu, dans la zone de la bande de brosses (23, 24), un dispositif d'arrêt (31) qui est destiné à accumuler des tranches (7) et qui se compose essentiellement de deux cylindres pneumatiques horizontaux (27) disposés symétriquement face à face et comportant chacun une tige de piston (28) et une tôle d'arrêt (29) pourvue de doigts (30).

10. Empileur de tranches selon l'une des revendications 1 à 9, caractérisé en ce que le dispositif de transport (9) coopère avec un dispositif de formation de piles (38) monté en aval qui se compose essentiellement d'un tourniquet (34-37 ; 45, 46) apte à tourner pas à pas sur un axe de rotation (39).

11. Empileur de tranches selon la revendication 10, caractérisé en ce que le tourniquet se compose essentiellement de doigts (45, 46) qui sont disposés de manière décalée sur la circonférence et qui forment les surfaces de butée (34-37) pour la pile de tranches (33), étant précisé que les doigts (45, 46), pour déposer la pile de tranches (33), pivotent et passent pas à pas sur les côtés d'une bande de transport (43) ou à travers les courroies de cette bande de transport (43).

12. Empileur de tranches selon la revendication 11, caractérisé en ce que des bandes de transport (43, 47) sont prévues pour le transport de la pile horizontale (33a, 33b) déposée par le tourniquet (34-37 ; 45, 46).
